# EUROPEAN PATENT APPLICATION

(11) **EP 4 676 066 A1**
(43) Date of publication of application: **07.01.2026**
(21) Application number: 24763030.4
(22) Date of filing: 21.02.2024
(51) Int. Cl.: H04N 21/44

(54) **VIDEO GENERATION METHOD AND APPARATUS, AND ELECTRONIC DEVICE**

(30) Priority: 27.02.2023 CN 202310175871
(71) Applicant: Beijing Zitiao Network Technology Co., Ltd., Beijing 100190 (CN)
(72) Inventor: HOU, Xiaoxia, Beijing 100028 (CN); PENG, Xurui, Beijing 100028 (CN); CHEN, Mingjin, Beijing 100028 (CN); NIU, Xusheng, Beijing 100028 (CN); XU, Yitian, Beijing 100028 (CN)
(74) Representative: Isarpatent
(86) International application number: PCT/CN2024/077922
(87) International publication number: WO 2024/179347

(57) **Abstract**

Embodiments of the present disclosure provide a video generation method and apparatus, and an electronic device. The video generation method comprises: obtaining a plurality of image materials; classifying the plurality of image materials into a plurality of material sets according to the positions of the plurality of image materials, and determining the positions of the plurality of material sets; generating a trajectory video on the basis of the positions of the plurality of material sets, wherein the trajectory video presents on a map a dynamic trajectory route formed by sequentially connecting position marks corresponding to the plurality of material sets; and generating a target video on the basis of video clips of the plurality of material sets and the trajectory video, wherein in the target video, a first video clip is adjacent to a third video clip, the third video clip is adjacent to a second video clip, the first video clip is a video clip of a material set corresponding to a first position mark, the second video clip is a video clip of a material set corresponding to a second position mark, and the third video clip is a video clip presenting a route segment of the trajectory route between the first position mark and the second position mark in the trajectory video.

## Description

The present application claims priority of the Chinese Patent Application No. 202310175871.6, filed on February 27, 2023, the disclosure of which is incorporated herein by reference in its entirety as part of the present application.

### TECHNICAL FIELD

Embodiments of the present disclosure relate to a video generating method and apparatus, and an electronic device.

### BACKGROUND

With the development of Internet, it is becoming more and more popular to record content by using short videos. The coherence of videos can make up for the shortcomings of scattered image content. People often use electronic devices to take photos or videos. At present, the method of converting photos into videos or merging a plurality of videos into one video is simple. The merged video only includes image information of original videos or photos, which cannot properly display the position information corresponding to photos. The video synthesized by using images has simple content, low quality and poor appearance.

### SUMMARY

The embodiments of the present disclosure aim to provide a video generating method and apparatus and an electronic device, in which videos can be synthesized conveniently and quickly, the synthesized videos can properly display position information corresponding to photos, the video content is rich, and the video quality and the appearance are improved.

In order to implement the above technical effects, the embodiments of the present disclosure are implemented through the following aspects.

In the first aspect, an embodiment of the present disclosure provides a video generating method, which include: acquiring a plurality of image materials, where the plurality of image materials have position information, and the position information corresponding to the image materials is used to indicate positions corresponding to the image materials; according to the positions corresponding to the plurality of image materials, dividing the plurality of image materials into a plurality of material sets, and determining positions corresponding to the plurality of material sets; where one of the material sets include at least one of the image materials, in the plurality of material sets, a distance between positions corresponding to different image materials in a same material set is less than a distance between positions corresponding to image materials in different material sets; generating a trajectory video based on the positions corresponding to the plurality of material sets; where the trajectory video is used to present a dynamic trajectory route on a map in which position marks corresponding to the plurality of material sets are connected in sequence; and generating a target video based on video clips of the plurality of material sets and the trajectory video; where a video clip of a target material set in the plurality of material sets is obtained by performing video editing processing on image materials in the target material set; where in the target video, a first video clip is adjacent to a third video clip, and the third video clip is adjacent to a second video clip; the first video clip is a video clip of a material set corresponding to a first position mark, the second video clip is a video clip of a material set corresponding to a second position mark, and the third video clip is a video clip in the trajectory video used to present a route segment between the first position mark and the second position mark of the trajectory route.

In the second aspect, an embodiment of the present disclosure provides a video generating apparatus, which includes an acquiring module, a processing module, a first determining module and a second determining module. The acquiring module is configured to acquire a plurality of image materials, where the plurality of image materials have position information, and the position information corresponding to the image materials is used to indicate positions corresponding to the image materials. The processing module is configured to, according to the positions corresponding to the plurality of image materials, divide the plurality of image materials into a plurality of material sets, and determine positions corresponding to the plurality of material sets; where one of the material sets include at least one of the image materials, in the plurality of material sets, a distance between positions corresponding to different image materials in a same material set is less than a distance between positions corresponding to image materials in different material sets. The first determining module is configured to generate a trajectory video based on the positions corresponding to the plurality of material sets; where the trajectory video is used to present a dynamic trajectory route on a map in which position marks corresponding to the plurality of material sets are connected in sequence. The second determining module is configured to generate a target video based on video clips of the plurality of material sets and the trajectory video; where a video clip of a target material set in the plurality of material sets is obtained by performing video editing processing on image materials in the target material set. **In** the target video, a first video clip is adjacent to a third video clip, and the third video clip is adjacent to a second video clip; the first video clip is a video clip of a material set corresponding to a first position mark, the second video clip is a video clip of a material set corresponding to a second position mark, and the third video clip is a video clip in the trajectory video used to present a route segment between the first position mark and the second position mark of the trajectory route.

In the third aspect, an embodiment of the present disclosure provides an electronic device, which includes a processor and a memory. The memory is configured to store computer-executable instructions. When the computer-executable instructions are executed, the processor is caused to execute the video generating method mentioned in the first aspect.

In the fourth aspect, an embodiment of the present disclosure provides a computer-readable medium. The computer-readable medium stores one or more programs, and when the one or more programs are executed by an electronic device including at least one application program, the electronic device is caused to execute the video generating method mentioned in the first aspect.

In an embodiment of the present disclosure, by acquiring a plurality of image materials, where the plurality of image materials have position information, and the position information corresponding to the image materials is used to indicate positions corresponding to the image materials; according to the positions corresponding to the plurality of image materials, dividing the plurality of image materials into a plurality of material sets, and determining positions corresponding to the plurality of material sets; where one of the material sets include at least one of the image materials, in the plurality of material sets, a distance between positions corresponding to different image materials in a same material set is less than a distance between positions corresponding to image materials in different material sets; generating a trajectory video based on the positions corresponding to the plurality of material sets; where the trajectory video is used to present a dynamic trajectory route on a map in which position marks corresponding to the plurality of material sets are connected in sequence; and generating a target video based on video clips of the plurality of material sets and the trajectory video; where a video clip of a target material set in the plurality of material sets is obtained by performing video editing processing on image materials in the target material set; where in the target video, a first video clip is adjacent to a third video clip, and the third video clip is adjacent to a second video clip; the first video clip is a video clip of a material set corresponding to a first position mark, the second video clip is a video clip of a material set corresponding to a second position mark, and the third video clip is a video clip in the trajectory video used to present a route segment between the first position mark and the second position mark of the trajectory route, videos can be synthesized conveniently and quickly, the synthesized videos can properly display position information corresponding to photos, the video content is rich, and the video quality and the appearance are improved.

### BRIEF DESCRIPTION OF DRAWINGS

In order to more clearly illustrate the technical solutions in the embodiments of the present disclosure, the drawings required in the description of the embodiments will be briefly introduced below, and it is obvious that the drawings described below are only some embodiments recorded in the present disclosure, and other drawings can be obtained according to these drawings without creative labor for those skilled in the art.
Fig. 1 illustrates a flowchart of a video generating method provided by an embodiment of the present disclosure.
Fig. 2a illustrates a schematic diagram of a dynamic trajectory fragment provided by an embodiment of the present disclosure.
Fig. 2b illustrates a schematic diagram of a target video provided by an embodiment of the present disclosure.
Fig. 3 illustrates another flowchart of a video generating method provided by an embodiment of the present disclosure.
Fig. 4 illustrates a schematic diagram of a first corresponding relationship provided by an embodiment of the present disclosure.
Fig. 5 illustrates a structural schematic diagram of a video generating apparatus provided by an embodiment of the present disclosure.
Fig. 6 illustrates a hardware structural schematic diagram of an electronic device that executes a video generating method provided by an embodiment of the present disclosure.

### DETAILED DESCRIPTION

In order to enable persons in the art to better understand the technical solutions in the present disclosure, the technical solutions in the embodiments of the present disclosure will be clearly and completely described below in conjunction with the drawings in the embodiments of the present disclosure. Based on the embodiments in the present disclosure, all other embodiments obtained by a person skilled in the art without creative labor shall fall within the scope of protection of the present disclosure.

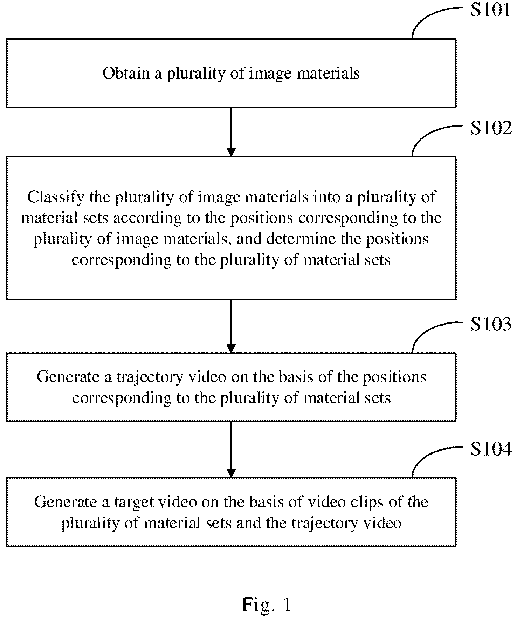

Fig. 1 illustrates a flowchart of a video generating method provided by an embodiment of the present disclosure. The method may be executed by an electronic device, such as a terminal device or a server device. In other words, the method may be executed by software or hardware installed in the terminal device or the server device. The server includes, but is not limited to, a single server, a server cluster, a cloud server or a cloud server cluster. As shown in the figure, the method can comprise the following steps.

Step S101: acquiring a plurality of image materials.

The image materials may be, for example, more than two photos or video files uploaded by users, or photos or video files acquired by an electronic device from its own image library and its own photo gallery. The plurality of image materials have position information, and the position information corresponding to the image materials is used to indicate positions corresponding to the image materials. For example, the attribute information of the image material may include position information of the image material, and the electronic device may acquire the position information that the image material carries when acquiring the image material. For example, photos shot by an electronic device such as a digital camera or a mobile phone generally carry an exchangeable image file format (Exif) for recording the attribute information and the shot data of the photos. According to Exif, the position information of the photo shooting can be determined.

In some cases, the image material does not carry its position information and time information, such as an old photo, etc. Optionally, the position information and the time information carried by the image material is not applicable to this step. For example, the content of the old photo corresponds to city A. However, the action of re-shooting the old photo may occur in city B, then the position information carried by the image material may be city B. Therefore, in this case, the user can also input the position information and the time information of the image material. The position information of the image material may be parsed as coordinates including a longitude and a latitude, or other parameters that characterize the position, such as a relative position parameter from a reference object, etc. Alternatively, the image material may also carry time information, and the time information of the image material includes the shooting date and the shooting time.

Step S102: according to the positions corresponding to the plurality of image materials, dividing the plurality of image materials into a plurality of material sets, and determining positions corresponding to the plurality of material sets.

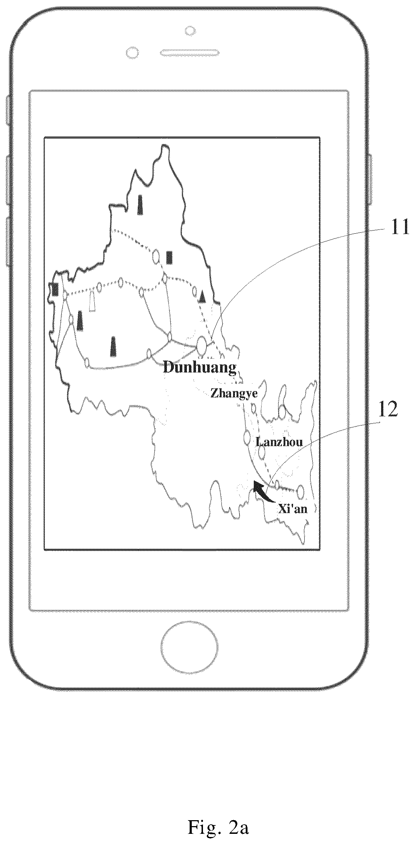

One of the material sets includes at least one of the image materials. In the plurality of material sets, a distance between positions corresponding to different image materials in the same material set is less than a distance between positions corresponding to image materials in different material sets. Alternatively, the difference between the positions corresponding to each image material in a material set may also be set to be less than a preset position threshold. Through the reasonable division of the material sets, the image materials at adjacent positions may be clustered into a cluster. For example, as shown in Fig. 2a, the image materials within the range of "Xi'an" may be clustered into a material set, and the image materials within the range of "Lanzhou" may be clustered into a material set. The distance between the positions corresponding to different image materials in the material set corresponding to "Xi'an" is less than the distance between the positions corresponding to the image materials of "Xi'an" material set and the image materials of "Lanzhou" material set.

The specific material set processing may include parsing the position information of each image material into coordinate information, and clustering the image materials in which the distance between coordinates falls within a preset position threshold into a cluster. In this step, a K-MEANS clustering algorithm may be used to cluster the image materials. Based on the distance between the position information of the image materials, the plurality of image materials can be divided into a plurality of material sets.

For example, as shown in Fig. 2a, in response to "Xi'an" corresponding to a plurality of image materials, the specific position information corresponding to each image material is slightly different, for example, corresponding to different streets in Xi'an. In response to forming position marks on the trajectory line 11 according to the specific position information of each image material, a large number of position marks are generated, and a large number of dynamic trajectories are generated in the subsequent steps. For example, a dynamic trajectory fragment 1 shows moving from the street a to the street b in Xi'an, and a dynamic trajectory fragment 2 shows moving from the street b to the street c in Xi'an. The granularity of the dynamic trajectory fragment is excessively fragmented, which will affect the video quality. By dividing the material set reasonably, the generated target video can properly display the position information corresponding to the image materials.

Alternatively, the position information of each material set may be determined by a mean value of the position information of a plurality of image materials in the material set.

In this embodiment, Xi'an may be divided into a material set by setting a preset position threshold. A piece of position information is formed in this step and marked on the trajectory line. Moreover, in the subsequent steps, a plurality of image materials in a material set are synthesized into a material fragment, to avoid the phenomenon that the granularity of the dynamic trajectory fragment is excessively fragmented.

Step S103: generating a trajectory video based on the positions corresponding to the plurality of material sets.

The trajectory video is used to present a dynamic trajectory route on a map in which position marks corresponding to the plurality of material sets are connected in sequence.

Fig. 2a is a schematic diagram of a dynamic trajectory route. The dynamic trajectory route, such as the trajectory line 11 in the figure, and the trajectory line 11 may include a plurality of position marks and at least one moving indicator 12. The position marks may be for example "Xi'an", "Lanzhou", etc. in the figure. The moving indicator 12 may be shown as the arrow in the figure. The specific marking form is only an example, which is not limited in the scheme.

Specifically, the positions corresponding to the position information determined in the previous step are "Xi'an", "Lanzhou", etc. on the map. In this step, the positions corresponding to a plurality of pieces of position information may be marked on the map by the position marks, and the position marks may be in the form of coordinate points. A plurality of position marks form the trajectory line 11. One of the position marks on the trajectory line 11 is used to indicate the position corresponding to at least one piece of the position information in the trajectory line 11.

Alternatively, the image materials may also carry time information. The corresponding relationship between the position information and the time information of the image material is a one-to-one relationship, that is, the position information of one image material corresponds to a time point. The moving order of the moving indicator 12 on the trajectory line may be determined according to the chronological order of a plurality of time points.

For example, the time information corresponding to the image material 1 is January 1 this year, which corresponds to the position information 1, and the position information 1 corresponds to the position mark "Xi'an" on the map. The time information corresponding to the image material 2 is January 5 this year, which corresponds to the position information 2, and the position information 2 corresponds to the position mark "Lanzhou" on the map"". The time information corresponding to the image material 3 is January 10th this year, which corresponds to the position information 3, and the position information 3 corresponds to the position mark "Zhangye" on the map. The time information corresponding to the image material 4 is January 15th this year, which corresponds to the position information 4, and the position information 4 corresponds to the position mark "Dunhuang" on the map"". A trajectory line 11 is formed between the position marks "Xi'an", "Lanzhou", "Zhangye" and "Dunhuang".

When the trajectory video is played, the moving indicator 12 can dynamically indicate the position change of moving from the first mark to the second mark among the plurality of position marks along the trajectory line with the time change indicated by the plurality of pieces of time information. For example, the moving indicator 12 may be an arrow used for indicating the moving position mark, which indicates a chronological order in the above example. The arrow may indicate the position change from "Xi'an" to "Lanzhou" along the trajectory line 11. The moving indicator 12 may be another indicator such as a cursor.

Step S104: generating a target video based on video clips of the plurality of material sets and the trajectory video.

A video clip of a target material set in the plurality of material sets is obtained by performing video editing processing on image materials in the target material set. In the target video, a first video clip is adjacent to a third video clip, and the third video clip is adjacent to a second video clip; the first video clip is a video clip of a material set corresponding to a first position mark, the second video clip is a video clip of a material set corresponding to a second position mark, and the third video clip is a video clip in the trajectory video used to present a route segment between the first position mark and the second position mark of the trajectory route.

As shown in Fig. 2a, for example, the first video clip is the video clip of the material set corresponding to "Xi'an", the second video clip is the video clip of the material set corresponding to "Lanzhou", and the third video clip is the video clip used to present a route segment of the trajectory route from "Xi'an" to "Lanzhou" in the trajectory video. The playing order in the target video may include the order of the first video clip, the third video clip and the second video clip.

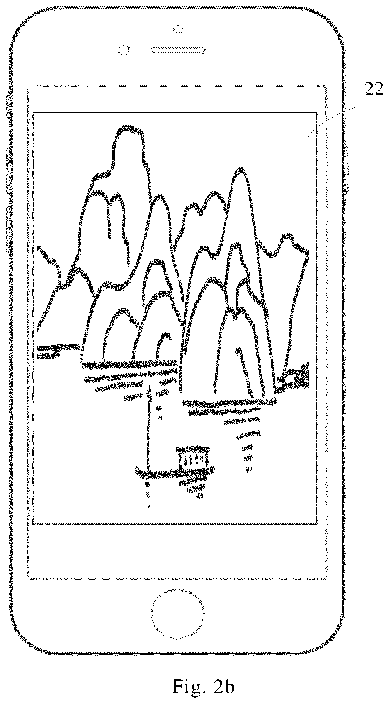

Fig. 2b is a schematic diagram of a first video clip. With reference to Fig. 2a, Fig. 2b may be used as a schematic diagram of the third video clip. In the target video, the first video clip shown in Fig. 2b, such as the scenery video of "Xi'an", may be displayed first, and then the third video clip shown in Fig. 2a may be displayed, where the moving indicator 12 may indicate the moving from a first identifier "Xi'an" to a second identifier "Lanzhou". Thereafter, a second video clip (not shown in the figure) corresponding to "Lanzhou" shown in Fig.2b is displayed. Furthermore, through a similar dynamic trajectory fragment, the moving from the first identifier "Lanzhou" to the second identifier "Zhangye" is displayed, and then the material fragment corresponding to "Zhangye" is displayed. Through the similar dynamic trajectory fragment, the moving from the first identifier "Zhangye" to the second identifier "Dunhuang" is displayed, and then the material fragment corresponding to "Dunhuang" is displayed, and so on. These are not shown one by one in the figure.

In addition, alternatively, the camera movement, animation or transition effect may be added in the switching process of the plurality of image materials. For example, the video frame rendering technology of the Open Graphics Library (OpenGL) is used to insert the transition effects such as flying in and fading out when image materials are switched, so as to improve the appearance of material fragments.

In one possible implementation, after the material set processing on the plurality of image materials, when a quantity of image materials in the plurality of material sets exceeds a quantity threshold, the image materials in the material sets are deleted based on a first preset rule until the quantity of the image materials in the material sets do not exceed the quantity threshold. Specifically, the first preset rule may perform deletion on the image materials according to the descending order of at least one score of the clarity, completeness or aesthetics of the image materials, and keep the image materials with a higher score of which the quantity does not exceed the quantity threshold. For example, photos with a low resolution, irregular composition or messy photo content are deleted. The implementation not only can solve the problems that the amount of calculation in the process of material sets is increased due to too many image materials and the generated video is too long, but also display rich video content and improve the appearance of the video.

In one possible implementation, content of the image materials in the material set is identified to determine at least one scene corresponding to the material set; first text information matched with a scene is determined in a first corresponding relationship between text information and the scene; and the first text information is displayed when a video clip of the material set is displayed.

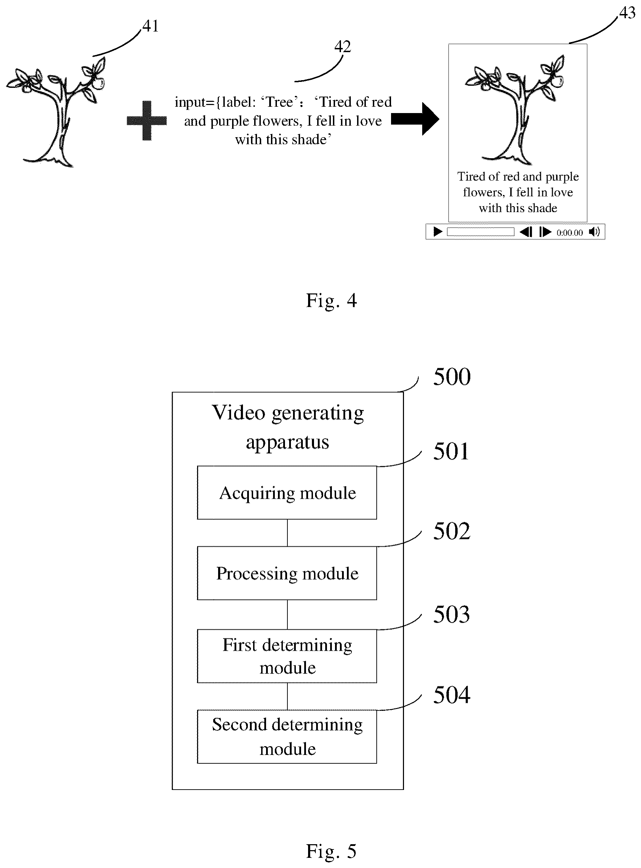

Before this step, a first corresponding relationship may be set. The first corresponding relationship includes the corresponding relationship between a plurality of scenes and the first text information. Fig. 4 shows a schematic diagram of a first corresponding relationship. The first corresponding relationship 42 may include the corresponding relationship between the scene "tree" and the first text information "Tired of red and purple flowers, I fell in love with this shade", that is, the input scene label "tree" corresponds to the first text information "Tired of red and purple flowers, I fell in love with this shade". When the scene 41 of the material fragment is determined as "tree", the first text information is displayed when the material fragment is played through the playing page 43.

For another example, the first corresponding relationship includes the corresponding relationship between the scene "Xi'an" and the first text information "four ancient capitals" and "the center of the Silk Road". As shown in Fig. 2a, image materials with position information all around Xi'an can be regarded as a material set, which is referred to as Xi'an material set. The material fragment corresponding to the Xi'an material set is generated, and the first text information "the center of the Silk Road" is displayed, so as to enrich the content of the video and increase the amount of information displayed in the video.

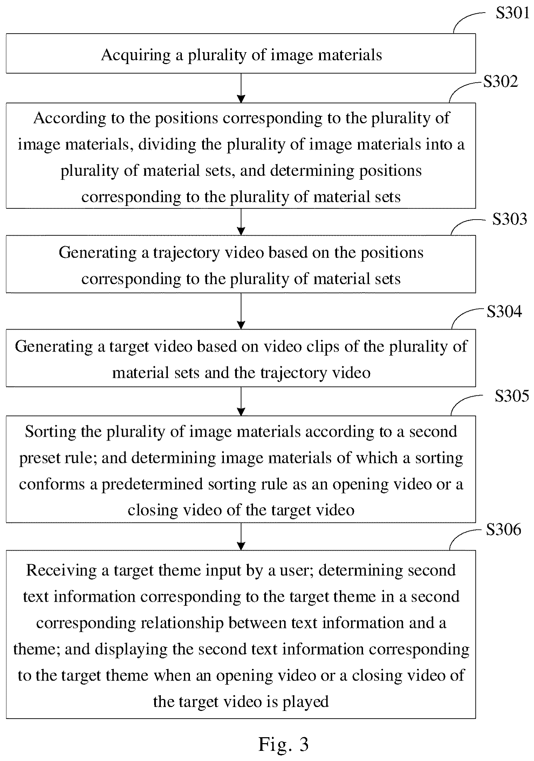

Fig. 3 shows another flowchart of a video generating method provided by an embodiment of the present disclosure. As shown in the figure, the method may include the following steps.

Step S301: acquiring a plurality of image materials.

Step S302: according to the positions corresponding to the plurality of image materials, dividing the plurality of image materials into a plurality of material sets, and determining positions corresponding to the plurality of material sets.

Step S303: generating a trajectory video based on the positions corresponding to the plurality of material sets.

Step S304: generating a target video based on video clips of the plurality of material sets and the trajectory video. The above steps can use the description of the corresponding steps in the embodiment of Fig. 1, which will not be described in detail here.

Step S305: sorting the plurality of image materials according to a second preset rule; and determining image materials of which a sorting conforms a predetermined sorting rule as an opening video or a closing video of the target video.

Specifically, the second preset rule may be a rule for scoring the aesthetics of the image materials according to the photography technique. For example, a quality evaluation model after being trained may be used to score the aesthetics of the image materials in terms of composition, color, light and shadow, content creativity, etc. The higher the photo quality, the higher the score. The image materials of which the sorting conforms the predetermined sorting rule are converted into a video, which is used as an opening video or a closing video of the target video to be spliced with the target video, so that the content of the video can be further enriched.

Step S306: receiving a target theme input by a user; determining second text information corresponding to the target theme in a second corresponding relationship between text information and a theme; and displaying the second text information corresponding to the target theme when an opening video or a closing video of the target video is displayed.

Specifically, the user can specify the theme expressed in the generated video, a plurality of scripts corresponding to the theme are queried according to the theme input by the user, and the plurality of scripts or one of the scripts is displayed in the opening video or the closing video of the target video. Alternatively, when the corresponding script cannot be queried according to the theme input by the user, a predetermined script, such as the most frequently used opening or closing remarks, may be displayed as the second text information in the opening video or the closing video of the target video.

In one implementation, a second corresponding relationship is set before this step. The second corresponding relationship includes the corresponding relationship between a plurality of themes and the second text information. For example, the second corresponding relationship includes the corresponding relationship between the theme "blue sky" and the second text information "white clouds are floating in the blue sky" and "the boundless grassland lies beneath the boundless skies, and when the winds blow and grass bends low, my sheep and cattle will emerge before your eyes", and includes the corresponding relationship between the theme "sunrise" and the second text information "At daybreak, red flowers at river rival fire". The type of the second corresponding relationship may be one-to-one, one-to-many, many-to-one or many-to-many corresponding relationship. The second corresponding relationship is provided similarly to the first corresponding relationship. Fig. 4 may be used as a schematic diagram, which will not be described in detail here.

In one implementation, the step S303 may include: generating a dynamic trajectory fragment on the map to represent the position change according to the preset navigation rule and the corresponding relationship. That is, the dynamic trajectory route is determined based on the preset navigation rule. Specifically, the preset navigation rule may be the navigation rule of different transportation modes. For example, the navigation rule of a high-speed train is used to generate discrete coordinates of a series of pathway stations from the departure point to the destination on the map, the moving process of the discrete coordinates is drawn frame by frame along with the change of time, and various image materials are connected in series as the dynamic trajectory fragment. The preset navigation rule may be acquired from a traffic Application (App). Alternatively, by inputting a them, the preset navigation rule that is matched with the theme may be determined. For example, in response to the video theme input by the user being "re-visiting the Silk Road", this step can determine the navigation information matched with the Silk Road, and generate a dynamic trajectory fragment to represent the position change on the map based on the corresponding relationship generated according to the navigation information of the Silk Road and the image material, as shown in Fig. 2a.

In the video generating method provided by an embodiment of the present disclosure, the dynamic trajectory fragment that represents the position change is generated on the map according to the preset navigation rule and the corresponding relationship, so that the dynamic trajectory fragment in the video can be more in line with the traffic scene, the content displayed in the video is further enriched, and the video quality is improved.

Fig. 5 illustrates a structural schematic diagram of a video generating apparatus provided by an embodiment of the present disclosure. The apparatus 500 includes an acquiring module 501, a processing module 502, a first determining module 503 and a second determining module 504.

The acquiring module 501 is configured to acquire a plurality of image materials, where the plurality of image materials have position information, and the position information corresponding to the image materials is used to indicate positions corresponding to the image materials.

The processing module 502 is configured to, according to the positions corresponding to the plurality of image materials, divide the plurality of image materials into a plurality of material sets, and determine positions corresponding to the plurality of material sets; where one of the material sets include at least one of the image materials, in the plurality of material sets, a distance between positions corresponding to different image materials in a same material set is less than a distance between positions corresponding to image materials in different material sets.

The first determining module 503 is configured to generate a trajectory video based on the positions corresponding to the plurality of material sets; where the trajectory video is used to present a dynamic trajectory route on a map in which position marks corresponding to the plurality of material sets are connected in sequence.

The second determining module 504 is configured to generate a target video based on video clips of the plurality of material sets and the trajectory video; where a video clip of a target material set in the plurality of material sets is obtained by performing video editing processing on image materials in the target material set. In the target video, a first video clip is adjacent to a third video clip, and the third video clip is adjacent to a second video clip; the first video clip is a video clip of a material set corresponding to a first position mark, the second video clip is a video clip of a material set corresponding to a second position mark, and the third video clip is a video clip in the trajectory video used to present a route segment between the first position mark and the second position mark of the trajectory route.

In an implementation, after dividing the plurality of image materials into a plurality of material sets, the processing module 502 is configured to, when a quantity of image materials in the plurality of material sets exceeds a quantity threshold, perform deletion on the image materials in the material sets until the quantity of image materials in the material sets do not exceed the quantity threshold.

In an implementation, after dividing the plurality of image materials into a plurality of material sets, the processing module 502 is configured to identify content of the image materials in the material set to determine at least one scene corresponding to the material set; determine first text information matched with a scene in a first corresponding relationship between text information and the scene; and display the first text information when a video clip of the material set is played.

In an implementation, after acquiring a plurality of image materials, the processing module 502 is configured to sort the plurality of image materials; determine image materials of which a sorting conforms a predetermined sorting rule as an opening video or a closing video of the target video.

In an implementation, after acquiring a plurality of image materials, the processing module 502 is configured to receive a target theme input by a user; determine second text information corresponding to the target theme in a second corresponding relationship between text information and a theme; and display the second text information corresponding to the target theme when an opening video or a closing video of the target video is displayed.

In an implementation, the dynamic trajectory route is determined based on a preset navigation rule.

In an implementation, the processing module 502 is configured to determine a position corresponding to the material set according to a mean value of the positions corresponding to the plurality of image materials in the material set.

The apparatus 500 provided by the embodiments of the present disclosure can execute the methods described in the preceding method embodiments, and implement the functions and beneficial effects of the methods described in the preceding method embodiments, which will not be repeated here.

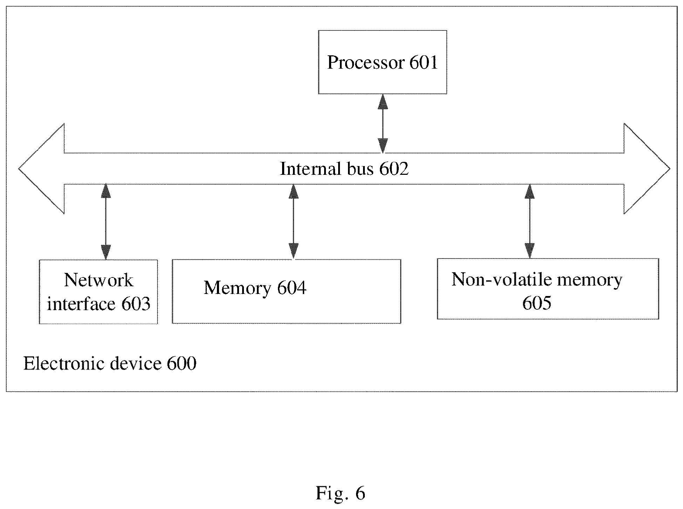

Fig. 6 illustrates a hardware structural schematic diagram of an electronic device that executes a video generating method provided by an embodiment of the present disclosure. Referring to the figure, at the hardware level, the electronic device includes a processor, and optionally, includes an internal bus, a network interface and a memory. The memory may include an internal memory, such as high-speed Random-Access memory (RAM), and may also include non-volatile memory, such as at least one disk memory. Of course, the electronic device may further include hardware required for other services.

The processor, the network interface and the memory may be connected to each other via the internal bus. The internal bus may be an Industry Standard Architecture (ISA) bus, a Peripheral Component Interconnect (PCI) bus, or an Extended Industry Standard Architecture, EISA) bus, etc. The bus may be divided into an address bus, a data bus, a control bus, etc. For illustrative purposes, the figure uses only a double-headed arrow to represent, but does not mean that there is only one bus or one type of bus.

The memory is used to store programs. Specifically, the programs may include program code, and the program code includes computer operation instructions. The memory may include an internal memory and a non-volatile memory, and provide instructions and data to the processor.

The processor reads the corresponding computer program from the non-volatile memory into memory and then runs it, forming an apparatus at the logical level to locate the target user. The processor executes the programs stored in the memory, and specifically is used to execute each method described in Fig. 1 and Fig. 3 in the preceding method embodiments, and implement the functions and beneficial effects of each method described in Fig. 1 and Fig. 3 in the preceding method embodiments, which will not be repeated herein.

The method disclosed in the above embodiments shown in Fig. 1 and Fig. 3 of the present disclosure may be applied to a processor or implemented by a processor. The processor may be an integrated circuit chip that has the ability to process signals. In the implementation process, each step of the above method can be completed by the integrated logic circuit of the hardware in the processor or the instructions in the form of software. The above-mentioned processor may be a general-purpose processor including a Central Processing Unit (CPU), a network processor (NP), etc., may also be a digital signal processor (DSP), an application specific integrated circuit (ASIC), a field-programmable gate array (FPGA) or other programmable logic device, a discrete gate or transistor logic device, and a discrete hardware component. Each method, step and logical block diagram disclosed in the embodiments of the present disclosure may be implemented or executed. The general-purpose processor may be a microprocessor, or the processor may be any regular processor, etc. The steps of the method disclosed in conjunction with the embodiments of the present disclosure may be directly embodied in the completion of the execution of the hardware decoding processor, or the execution is completed by the combination of hardware and software modules in the decoding processor. The software module may be located in a random memory, a flash memory, a read-only memory, a programmable read-only memory, or an electrically rewritable programmable memory, a register and other mature storage medium in the field. The storage medium is located in a memory, and the processor reads the information in the memory, and completes the steps of the above method combined with its hardware.

The electronic device may also perform each method described in Fig. 1 and Fig. 3 in the preceding method embodiments, and implements the functions and beneficial effects of each method described in Fig. 1 and Fig. 3 in the preceding method embodiments, and will not be repeated herein.

Of course, in addition to the software implementation, the electronic device of the present disclosure does not exclude other implementations, such as logic devices or the combination of software and hardware, etc., that is, the execution subject of the following processing process is not limited to each logic unit, but may also be hardware or a logic device.

The embodiments of the disclosure also provides a computer-readable storage medium. The computer-readable medium stores one or more programs, and when the one or more programs are executed by an electronic device including a plurality of applications, the electronic device is caused to execute the methods described in Fig. 1 and Fig. 3 of the preceding method embodiments, and implement the functions and beneficial effects of the methods described in Fig. 1 and Fig. 3 in the preceding method embodiments, which will not be repeated herein.

The computer-readable storage medium includes a read-only memory (referred to as ROM), a random access memory (referred to as RAM), a magnetic disk or an optical disc, etc.

Further, the embodiments of the present disclosure further provides a computer program product, the computer program product includes a computer program stored on a non-transient computer-readable storage medium, the computer program includes a program instruction, and when the program instruction is executed by a computer, the functions and beneficial effects of the methods described in Fig. 1 and Fig. 3 of the preceding method embodiments are implemented, which will not be repeated herein.

In conclusion, the foregoing is only some better embodiments of the present disclosure and is not intended to limit the scope of protection of the present disclosure. Any modifications, equivalent replacements, improvements, etc., made within the spirit and principles of the present disclosure shall be included in the scope of protection of the present disclosure.

The system, apparatus, module, or unit illustrated in the above embodiments may be implemented by a computer chip or entity, or by a product with a certain function. A typical implementation device is a computer. Specifically, the computer may be, for example, a personal computer, a laptop, a cellular phone, a camera phone, a smartphone, a personal digital assistant, a media player, a navigation device, an e-mail device, a gaming console, a tablet personal computer, a wearable device, or any combination of these devices.

The computer-readable media include permanent and non-permanent, removable and non-removable media, and information storage may be implemented by any method or technology. Information may be computer-readable instructions, data structures, modules of programs, or other data. Examples of the computer storage media include, but are not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technology, read-only optical disc read-only memory (CD-ROM), digital multi-function disc (DVD) or other optical storage, magnetic cartridge tape, magnetic disk storage or other magnetic storage device, or any other non-transport medium. The computer storage media may be used to store information that may be accessed by computing devices. As defined in this document, computer-readable media do not include computer-readable media (transitory media), such as modulated data signals and carriers.

It should also be noted that the term "including", "comprising" or any other variation thereof is intended to cover non-exclusive inclusion, so that the process, method, goods or device that include a series of elements includes not only those elements, but also other elements that are not expressly listed, or that are inherent to such process, method, goods or device. In the absence of further restrictions, an element qualified by the phrase "including a ......" does not preclude the existence of other identical elements in the process, method, goods or device that include the element.

The embodiments of the present disclosure are described in a progressive manner, and the same and similar parts between each embodiment may refer to each other, and each embodiment focuses on the differences from other embodiments. In particular, for the system embodiment, because it is basically similar to the method embodiment, the description is relatively simple, and the relevant places may be described in part of the method embodiment.

## Claims

1. A video generating method, comprising:
acquiring a plurality of image materials, wherein the plurality of image materials have position information, and the position information corresponding to the image materials is used to indicate positions corresponding to the image materials;
according to the positions corresponding to the plurality of image materials, dividing the plurality of image materials into a plurality of material sets, and determining positions corresponding to the plurality of material sets; wherein one of the material sets comprises at least one of the image materials; in the plurality of material sets, a distance between positions corresponding to different image materials in a same material set is less than a distance between positions corresponding to image materials in different material sets;
generating a trajectory video based on the positions corresponding to the plurality of material sets; wherein the trajectory video is used to present a dynamic trajectory route on a map in which position marks corresponding to the plurality of material sets are connected in sequence; and
generating a target video based on video clips of the plurality of material sets and the trajectory video;
wherein a video clip of a target material set in the plurality of material sets is obtained by performing video editing processing on image materials in the target material set; and
in the target video, a first video clip is adjacent to a third video clip, and the third video clip is adjacent to a second video clip; the first video clip is a video clip of a material set corresponding to a first position mark, the second video clip is a video clip of a material set corresponding to a second position mark, and the third video clip is a video clip in the trajectory video used to present a route segment between the first position mark and the second position mark of the trajectory route.

2. The video generating method according to claim 1, wherein after the dividing the plurality of image materials into a plurality of material sets, the method further comprises:
when a quantity of image materials in the plurality of material sets exceeds a quantity threshold, performing deletion on the image materials in the material sets until the quantity of image materials in the material sets do not exceed the quantity threshold.

3. The video generating method according to claim 1, wherein after the dividing the plurality of image materials into a plurality of material sets, the method further comprises:
identifying content of the image materials in the material set to determine at least one scene corresponding to the material set;
determining first text information matched with a scene in a first corresponding relationship between text information and the scene; and
displaying the first text information when a video clip of the material set is played.

4. The video generating method according to any one of claims 1 to 3, wherein after the acquiring a plurality of image materials, the method further comprises:
sorting the plurality of image materials; and
determining image materials of which a sorting conforms a predetermined sorting rule as an opening video or a closing video of the target video.

5. The video generating method according to any one of claims 1 to 3, wherein after the acquiring a plurality of image materials, the method further comprises:
receiving a target theme input by a user;
determining second text information corresponding to the target theme in a second corresponding relationship between text information and a theme; and
displaying the second text information corresponding to the target theme when an opening video or a closing video of the target video is displayed.

6. The video generating method according to any one of claims 1 to 5, wherein the dynamic trajectory route is determined based on a preset navigation rule.

7. The video generating method according to any one of claims 1 to 6, wherein the determining positions corresponding to the plurality of material sets comprises:
determining a position corresponding to the material set according to a mean value of the positions corresponding to the plurality of image materials in the material set.

8. A video generating apparatus, comprising:
an acquiring module, configured to acquire a plurality of image materials, wherein the plurality of image materials have position information, and the position information corresponding to the image materials is used to indicate positions corresponding to the image materials;
a processing module, configured to, according to the positions corresponding to the plurality of image materials, divide the plurality of image materials into a plurality of material sets, and determine positions corresponding to the plurality of material sets; wherein one of the material sets comprises at least one of the image materials; in the plurality of material sets, a distance between positions corresponding to different image materials in a same material set is less than a distance between positions corresponding to image materials in different material sets;
a processing module, configured to generate a trajectory video based on the positions corresponding to the plurality of material sets; wherein the trajectory video is used to present a dynamic trajectory route on a map in which position marks corresponding to the plurality of material sets are connected in sequence; and
a second determining module, configured to generate a target video based on video clips of the plurality of material sets and the trajectory video;
wherein a video clip of a target material set in the plurality of material sets is obtained by performing video editing processing on image materials in the target material set;
in the target video, a first video clip is adjacent to a third video clip, and the third video clip is adjacent to a second video clip; the first video clip is a video clip of a material set corresponding to a first position mark, the second video clip is a video clip of a material set corresponding to a second position mark, and the third video clip is a video clip in the trajectory video used to present a route segment between the first position mark and the second position mark of the trajectory route.

9. An electronic device, comprising:
a processor; and
a memory, configured to store computer-executable instructions, wherein when the computer-executable instructions are executed, the processor is caused to execute the video generating method according to any one of claims 1 to 7.

10. A computer-readable medium, wherein the computer-readable medium stores one or more programs, and when the one or more programs are executed by an electronic device comprising at least one application program, the electronic device is caused to execute the video generating method according to any one of claims 1 to 7.
